# EUROPEAN PATENT SPECIFICATION

(11) **EP 4 207 857 B1**
(45) Date of publication and mention of the grant of the patent: **09.12.2026**
(21) Application number: 20958099.2
(22) Date of filing: 21.10.2020
(51) Int. Cl.: H04W 24/02, H04W 8/24, H04W 24/10

(54) **DATA TRANSMISSION METHOD AND COMMUNICATION APPARATUS**
DATENÜBERTRAGUNGSVERFAHREN UND KOMMUNIKATIONSVORRICHTUNG
PROCÉDÉ DE TRANSMISSION DE DONNÉES ET APPAREIL DE COMMUNICATION

(43) Date of publication of application: 05.07.2023
(73) Proprietor: Huawei Technologies Co., Ltd., Shenzhen, Guangdong 518129 (CN)
(72) Inventor: YANG, Shuigen, Shenzhen, Guangdong 518129 (CN); JIN, Yinghao, Shenzhen, Guangdong 518129 (CN); ZHOU, Yu, Shenzhen, Guangdong 518129 (CN)
(74) Representative: Epping - Hermann - Fischer
(86) International application number: PCT/CN2020/122545
(87) International publication number: WO 2022/082516

(56) References cited:
- EP-B1- 3 944 661
- CN-A- 106 447 291
- CN-A- 107 766 940
- CN-A- 111 602 148
- US-A1- 2018 284 737
- US-A1- 2018 376 416
- US-A1- 2019 272 479
- US-B1- 10 039 016

## Description

### TECHNICAL FIELD

This application relates to the field of communication technologies, and in particular, to a data transmission method and a communication apparatus.

### BACKGROUND

A machine learning (machine learning, ML) model is a mathematical model or a signal model for statistically describing a feature of a given dataset. When the ML model is introduced into a wireless communication network, a terminal device sends, to a network device, data for training the ML model. Correspondingly, the network device receives, from the terminal device, the data for training the ML model, to perform ML model training. The ML model is used to perform a learning task relevant to a feature of the foregoing data.

However, in the foregoing process, the terminal device cannot learn of specific data relevant to the learning task. Therefore, the terminal device sends a large quantity of data to the network device, and the network device obtains the data for training the ML model. In this case, most of the data sent by the terminal device is irrelevant to the learning task. This wastes transmission resources.

US 2018/0376416 A1 discloses a hub device of a network, which receives topology data for the network that indicates changes in a topology or performance of the network. The hub device determines modifications to processing functions for edge devices of the network based on the topology data. The hub device deploys the modifications to respective edge devices of the network. An edge device may collect data and use a processing function to perform operations on the data, generate processed data, and send the processed data to the hub device for further processing. In some cases, a remote provider network receives topology data for the network and generates modifications to processing functions for edge devices of the network based on the topology data. The remote provider network then transmits the modifications to the network.

US2018/284737 A1 discloses a monitoring apparatus, systems and methods for data collection in an industrial environment. A system may include a data collector communicatively coupled to a plurality of input channels and to a network infrastructure, wherein the data collector collects data based on a selected data collection routine, a data storage structured to store a plurality of collector routes and collected data, a data acquisition circuit structured to interpret a plurality of detection values from the collected data, and a data analysis circuit structured to analyze the collected data and determine an aggregate rate of data being collected from the plurality of input channels, wherein if the aggregate rate exceeds a throughput parameter of the network infrastructure, then the data analysis circuit alters the data collection to reduce the amount of data collected.

### SUMMARY

Embodiments of this application provide a data transmission method and a communication apparatus, to save transmission resources. The invention is defined by the appended claims.

To achieve the foregoing objective, the following technical solutions are used in embodiments of this application.

According to a first aspect, an embodiment of this application provides a data transmission method. The method may be performed by a terminal device, or may be performed by a chip used in the terminal device. The following provides descriptions by using an example in which the method is performed by the terminal device. The method is defined by attached independent claim 1.

In this way, the network device indicates the first selection method to the terminal device, so that the terminal device performs the data selection. In this case, data sent by the terminal device to the network device includes the filtered first data. The first data is relevant to the ML task. This meets an ML task requirement of the network device, and can reduce an amount of transmitted data, to reduce transmission resource overheads. In addition, a large quantity of data does not need to exist on the network device. This reduces storage resource overheads of the network device. Because the first data is relevant to the ML task, an ML model obtained through training based on the first data has a strong generalization capability. Even if the ML model is applied to another scenario, and new data is input into the ML model, the ML model can still provide an appropriate output.

According to the first aspect, the data transmission method of this application includes: The terminal device sends capability information to the network device. The capability information is used to determine the first selection method. In other words, when determining the first selection method, the network device considers a difference between capabilities of different terminal device, to ensure that the terminal device successfully performs the data selection, and the selected first data meets the ML task requirement.

Further according to the first aspect, the capability information includes a second selection method. The second selection method includes a selection method supported by the terminal device, to ensure that the terminal device successfully performs the data selection.

In a possible design, the capability information includes at least one of the following: a computing capability or a data capacity. The computing capability includes a data processing capability of the terminal device, and is related to factors such as hardware configuration performance of the terminal device and running smoothness of an operating system, so that the network device determines the first selection method that matches the computing capability of the terminal device. The data capacity includes an amount of data that is stored by the terminal device and that is used for machine learning, so that the network device determines the first selection method that matches the data capacity.

In a possible design, the data transmission method in this embodiment of this application further includes: The terminal device receives a performance measurement index from the network device, and then the terminal device sends a value of the performance measurement index to the network device.

The value of the performance measurement index can represent validity of the first selection method in the ML task. Therefore, the network device allocates a weight to the first data of the terminal device based on the value of the performance measurement index, and performs ML model training based on the first data and the weight, to further improve the generalization capability of the ML model.

In a possible design, the performance measurement index includes at least one of the following: a Jaccard coefficient JC, a Rand index RI, an accuracy rate, or an error rate.

In a possible design, the data transmission method in this embodiment of this application further includes: The terminal device receives a stopping criterion from the network device. The stopping criterion indicates a condition that needs to be met when the terminal device stops the data selection. That the terminal device performs data selection by using the first selection method, to obtain the first data includes: The terminal device performs, based on the stopping criterion, the data selection by using the first selection method, to obtain the first data.

In this way, in a process in which the terminal device performs the data selection, if the stopping criterion is met, the terminal device stops data selection processing, to reduce data selection time and data processing resource overheads of the terminal device.

In a possible design, the stopping criterion includes at least one of the following: a feature quantity, a quantity of iterations, or an iteration performance condition. The feature quantity includes a quantity of features of the first data. The quantity of iterations includes a quantity of iterations performed by the terminal device by using the first selection method during the data selection. The iteration performance condition includes a value of a performance measurement index that needs to be met when the terminal device stops the data selection by using the first selection method.

In a possible design, the first selection method includes one of the following: a relevant features method, an information gain method, a multi-cluster feature selection method, a Las Vegas wrapper method, a ridge regression method, or a least absolute shrinkage operator method.

According to a second aspect, an embodiment of this application provides a data transmission method. The method may be performed by a network device, or may be performed by a chip used in the network device. The following provides descriptions by using an example in which the method is performed by the network device. The method is defined by attached independent claim 8.

According to the second aspect, the data transmission method according to this application includes: The network device receives capability information from the terminal device. The capability information indicates a device capability of the terminal device for performing data selection. Then, the network device determines the first selection method based on the capability information and the ML task.

Further according to the second aspect, the capability information includes a second selection method. The second selection method includes a selection method supported by the terminal device.

In a possible design, the capability information includes at least one of the following: a computing capability or a data capacity. The computing capability includes a data processing capability of the terminal device. The data capacity includes an amount of data that is stored by the terminal device and that is used for machine learning.

In a possible design, the data transmission method in this embodiment of this application further includes: The network device sends a performance measurement index to the terminal device. Then, the network device receives a value of the performance measurement index from the terminal device. The value of the performance measurement index is used to determine validity of the first selection method in the ML task.

In a possible design, the performance measurement index includes at least one of the following: a Jaccard coefficient JC, a Rand index RI, an accuracy rate, or an error rate.

In a possible design, the data transmission method in this embodiment of this application further includes: The network device sends a stopping criterion to the terminal device. The stopping criterion indicates a condition that needs to be met when the terminal device stops the data selection. The first data includes data obtained by the terminal device through the data selection.

In a possible design, the stopping criterion includes at least one of the following: a feature quantity, a quantity of iterations, or an iteration performance condition. The feature quantity includes a quantity of features of the first data. The quantity of iterations includes a quantity of iterations performed by the terminal device by using the first selection method during the data selection. The iteration performance condition includes a value of a performance measurement index that needs to be met when the terminal device stops the data selection by using the first selection method.

In a possible design, the first selection method includes one of the following: a relevant features method, an information gain method, a multi-cluster feature selection method, a Las Vegas wrapper method, a ridge regression method, or a least absolute shrinkage operator method.

According to a third aspect, an example for a better understanding provides a data transmission method. The method may be performed by a terminal device, or may be performed by a chip used in the terminal device. The following provides descriptions by using an example in which the method is performed by the terminal device. The method includes: A terminal device determines, based on a machine learning ML task, a first selection method from a second selection method supported by the terminal device. The first selection method is used to select first data relevant to the machine learning ML task. The terminal device receives a stopping criterion from a network device. The stopping criterion indicates a condition that needs to be met when the terminal device stops data selection. The terminal device performs, based on the stopping criterion, the data selection by using the first selection method, to obtain the first data. Then, the terminal device sends the first data to the network device.

In this way, the terminal device independently determines the first selection method, to perform the data selection. In this case, data sent by the terminal device to the network device includes the filtered first data. The first data is relevant to the ML task. This meets an ML task requirement of the network device, and can reduce an amount of transmitted data, to reduce transmission resource overheads. In addition, a large quantity of data does not need to exist on the network device. This reduces storage resource overheads of the network device. Because the first data is relevant to the ML task, an ML model obtained through training based on the first data has a strong generalization capability.

In a possible design, the stopping criterion includes at least one of the following: a feature quantity, a quantity of iterations, or an iteration performance condition. The feature quantity includes a quantity of features of the first data. The quantity of iterations includes a quantity of iterations performed by the terminal device by using the first selection method during the data selection. The iteration performance condition includes a value of a performance measurement index that needs to be met when the terminal device stops the data selection by using the first selection method.

In a possible design, the first selection method includes one of the following: a relevant features method, an information gain method, a multi-cluster feature selection method, a Las Vegas wrapper method, a ridge regression method, or a least absolute shrinkage operator method.

According to a fourth aspect, an example for a better understanding provides a data transmission method. The method may be performed by a network device, or may be performed by a chip used in the network device. The following provides descriptions by using an example in which the method is performed by the network device. The method includes: The network device sends a stopping criterion to a terminal device. The stopping criterion indicates a condition that needs to be met when the terminal device stops data selection. Then, the network device receives first data from the terminal device. The first data includes data obtained by the terminal device through the data selection and is relevant to a machine learning ML task. The first data is used to train a model of the ML task.

In a possible design, the stopping criterion includes at least one of the following: a feature quantity, a quantity of iterations, or an iteration performance condition. The feature quantity includes a quantity of features of the first data. The quantity of iterations includes a quantity of iterations performed by the terminal device by using the first selection method during the data selection. The iteration performance condition includes a value of a performance measurement index that needs to be met when the terminal device stops the data selection by using the first selection method.

In a possible design, the first selection method includes one of the following: a relevant features method, an information gain method, a multi-cluster feature selection method, a Las Vegas wrapper method, a ridge regression method, or a least absolute shrinkage operator method.

According to a fifth aspect, an embodiment of this application provides a communication apparatus. The communication apparatus may be the terminal device in any one of the first aspect or the possible designs of the first aspect, an apparatus disposed in the terminal device, or a chip implementing a function of the terminal device. The communication apparatus includes a corresponding module, unit, or means (means) for implementing the foregoing method. The module, unit, or means may be implemented by hardware or software, or implemented by hardware executing corresponding software. The hardware or the software includes one or more modules or units corresponding to the function.

The communication apparatus includes a receiving unit, a sending unit, and a processing unit and is defined by the attached independent claim 9.

In a possible design, the receiving unit is further configured to receive a performance measurement index from the network device. The sending unit is further configured to send a value of the performance measurement index to the network device.

In a possible design, the receiving unit is further configured to receive a stopping criterion from the network device. The stopping criterion indicates a condition that needs to be met when the communication apparatus stops the data selection. The processing unit is specifically configured to perform, based on the stopping criterion, the data selection by using the first selection method, to obtain the first data.

All related content in any one of the first aspect or the possible designs of the first aspect may be referenced to function descriptions of corresponding units. Details are not described herein again.

According to a sixth aspect, an embodiment of this application provides a communication apparatus. The communication apparatus may be the network device in any one of the second aspect or the possible designs of the second aspect, an apparatus disposed in the network device, or a chip implementing a function of the network device. The communication apparatus includes a corresponding module, unit, or means (means) for implementing the foregoing method. The module, unit, or means may be implemented by hardware or software, or implemented by hardware executing corresponding software. The hardware or the software includes one or more modules or units corresponding to the function.

The communication apparatus includes a receiving unit, a sending unit, and a processing unit and is defined by attached independent claim 10.

According to the sixth aspect, the receiving unit is configured to receive capability information from the terminal device. The capability information indicates a device capability of the terminal device for performing data selection. The processing unit is further configured to determine the first selection method based on the capability information and the ML task.

In a possible design, the sending unit is further configured to send a performance measurement index to the terminal device. The receiving unit is further configured to receive a value of the performance measurement index from the terminal device. The value of the performance measurement index is used to determine validity of the first selection method in the ML task.

In a possible design, the sending unit is further configured to send a stopping criterion to the terminal device. The stopping criterion indicates a condition that needs to be met when the terminal device stops the data selection. The first data includes data obtained by the terminal device through the data selection.

All related content in any one of the second aspect or the possible designs of the second aspect may be referenced to function descriptions of corresponding units. Details are not described herein again.

According to a seventh aspect, an example for a better understanding provides a communication apparatus. The communication apparatus may be the terminal device in any one of the third aspect or the possible designs of the third aspect, an apparatus disposed in the terminal device, or a chip implementing a function of the terminal device. The communication apparatus includes a corresponding module, unit, or means (means) for implementing the foregoing method. The module, unit, or means may be implemented by hardware or software, or implemented by hardware executing corresponding software. The hardware or the software includes one or more modules or units corresponding to the function.

The communication apparatus includes a receiving unit, a sending unit, and a processing unit. The processing unit is configured to determine, based on a machine learning ML task, a first selection method from a second selection method supported by the terminal device. The first selection method is used to select first data relevant to the machine learning ML task. The receiving unit is configured to receive a stopping criterion from a network device. The stopping criterion indicates a condition that needs to be met when the communication apparatus stops data selection. The processing unit is further configured to perform, based on the stopping criterion, the data selection by using the first selection method, to obtain the first data. Then, the sending unit is configured to send the first data to the network device.

All related content in any one of the third aspect or the possible designs of the third aspect may be referenced to function descriptions of corresponding units. Details are not described herein again.

According to an eighth aspect, an example for a better understanding provides a communication apparatus. The communication apparatus may be the network device in any one of the fourth aspect or the possible designs of the fourth aspect, an apparatus disposed in the network device, or a chip implementing a function of the network device. The communication apparatus includes a corresponding module, unit, or means (means) for implementing the foregoing method. The module, unit, or means may be implemented by hardware or software, or implemented by hardware executing corresponding software. The hardware or the software includes one or more modules or units corresponding to the function.

The communication apparatus includes a sending unit, a receiving unit, and a processing unit. The sending unit is configured to send a stopping criterion to a terminal device. The stopping criterion indicates a condition that needs to be met when the terminal device stops data selection. Then, the receiving unit is configured to receive first data from the terminal device. The first data includes data obtained by the terminal device through data selection and is relevant to a machine learning ML task. The processing unit is configured to train a model of the ML task based on the first data.

All related content in any one of the fourth aspect or the possible designs of the fourth aspect may be referenced to function descriptions of corresponding units. Details are not described herein again.

According to a ninth aspect, an embodiment of this application provides a communication apparatus, including a processor and a memory. The memory is configured to store computer instructions. When the processor executes the instructions, the communication apparatus is enabled to perform the method performed by the terminal device in any one of the foregoing aspects or any one of the possible designs of the foregoing aspects. The communication apparatus may be the terminal device in any one of the first aspect or the possible designs of the first aspect, or a chip implementing a function of the terminal device. Alternatively, as an example for a better understanding, the communication apparatus may be the terminal device in any one of the third aspect or the possible designs of the third aspect, or a chip implementing a function of the terminal device.

According to a tenth aspect, an embodiment of this application provides a communication apparatus, including a processor. The processor is coupled to a memory, and is configured to read and execute instructions in the memory, so that the communication apparatus performs the method performed by the terminal device in any one of the foregoing aspects or the possible designs of the foregoing aspects. The communication apparatus may be the terminal device in any one of the first aspect or the possible designs of the first aspect, or a chip implementing a function of the terminal device. Alternatively, as an example for a better understanding, the communication apparatus may be the terminal device in any one of the third aspect or the possible designs of the third aspect, or a chip implementing a function of the terminal device.

According to an eleventh aspect, an embodiment of this application provides a chip, including a logic circuit and an input/output interface. The input/output interface is configured to communicate with a module other than the chip. For example, the chip may be a chip implementing a function of the terminal device in any one of the first aspect or the possible designs of the first aspect. The input/output interface inputs information about a first selection method, or the input/output interface outputs first data. The logic circuit is configured to run a computer program or instructions, to implement the method in any one of the first aspect or the possible designs of the first aspect. Alternatively, as an example for a better understanding, the chip may be a chip implementing a function of the terminal device in any one of the third aspect or the possible designs of the third aspect. The input/output interface inputs a stopping criterion, or the input/output interface outputs first data. The logic circuit is configured to run a computer program or instructions, to implement the method in any one of the third aspect or the possible designs of the third aspect.

According to a twelfth aspect, an embodiment of this application provides a communication apparatus, including a processor and a memory. The memory is configured to store computer instructions. When the processor executes the instructions, the communication apparatus is enabled to perform the method performed by the network device in any one of the foregoing aspects or any one of the possible designs of the foregoing aspects. The communication apparatus may be the network device in any one of the second aspect or the possible designs of the second aspect, or a chip implementing a function of the network device. Alternatively, as an example for a better understanding, the communication apparatus may be the network device in any one of the fourth aspect or the possible designs of the fourth aspect, or a chip implementing a function of the network device.

According to a thirteenth aspect, an embodiment of this application provides a communication apparatus, including a processor. The processor is coupled to a memory, and is configured to read and execute instructions in the memory, so that the communication apparatus performs the method performed by the network device in any one of the foregoing aspects or the possible designs of the foregoing aspects. The communication apparatus may be the network device in any one of the second aspect or the possible designs of the second aspect, or a chip implementing a function of the network device. Alternatively, as an example for a better understanding, the communication apparatus may be the network device in any one of the fourth aspect or the possible designs of the fourth aspect, or a chip implementing a function of the network device.

According to a fourteenth aspect, an embodiment of this application provides a chip, including a logic circuit and an input/output interface. The input/output interface is configured to communicate with a module other than the chip. For example, the chip may be a chip implementing a function of the network device in any one of the second aspect or the possible designs of the second aspect. The input/output interface outputs information about a first selection method, or the input/output interface inputs first data. The logic circuit is configured to run a computer program or instructions, to implement the method in any one of the second aspect or the possible designs of the second aspect. Alternatively, as an example for a better understanding, the chip may be a chip implementing a function of the network device in any one of the fourth aspect or the possible designs of the fourth aspect. The input/output interface outputs a stopping criterion, or the input/output interface inputs first data. The logic circuit is configured to run a computer program or instructions, to implement the method in any one of the fourth aspect or the possible designs of the fourth aspect. According to a fifteenth aspect, an embodiment of this application provides a computer-readable storage medium. The computer-readable storage medium stores instructions. When the instructions are run on a computer, the computer is enabled to perform the data transmission method in any one of the foregoing aspects.

According to a sixteenth aspect, an example for a better understanding provides a computer program product including instructions. When the computer program product runs on a computer, the computer is enabled to perform the data transmission method in any one of the foregoing aspects.

According to a seventeenth aspect, an example for a better understandingprovides a circuit system. The circuit system includes a processing circuit. The processing circuit is configured to perform the data transmission method in any one of the foregoing aspects.

According to an eighteenth aspect, an example for a better understandingprovides a communication system. The communication system includes the terminal device and the network device in any one of the foregoing aspects. For technical effects brought by any design of the fifth aspect to the eighteenth aspect, refer to the beneficial effects in the corresponding method provided above. Details are not described herein again.

### BRIEF DESCRIPTION OF DRAWINGS

FIG. 1 is a schematic diagram of a neural network according to an embodiment of this application;
FIG. 2 is a schematic diagram of a network architecture according to an embodiment of this application;
FIG. 3 is a schematic diagram of a distributed network architecture according to an embodiment of this application;
FIG. 4 is a schematic flowchart of a data transmission method according to an embodiment of this application;
FIG. 5 is a schematic flowchart of capability information transmission according to an embodiment of this application;
FIG. 6 is a schematic flowchart of performance measurement index transmission according to an embodiment of this application;
FIG. 7 is a schematic flowchart of stopping criterion transmission according to an embodiment of this application;
FIG. 8 is a schematic flowchart of another data transmission method according to an embodiment of this application;
FIG. 9a is a schematic hierarchical diagram of a communication protocol according to an embodiment of this application;
FIG. 9b is a schematic hierarchical diagram of another communication protocol according to an embodiment of this application;
FIG. 10 is a schematic diagram of a structure of a communication apparatus according to an embodiment of this application; and
FIG. 11 is a schematic diagram of a structure of another communication apparatus according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the term such as "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

Technical terms used in embodiments of this application are first described.

### 1. Machine learning (machine learning, ML) model

The ML model is also referred to as an artificial intelligence (artificial intelligence, AI) model. The ML model is a mathematical model or signal model for statistically describing a feature of a given dataset.

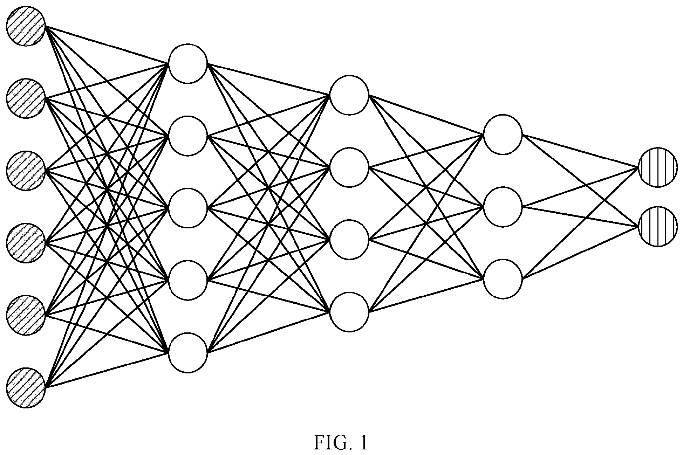

The ML model includes a supervised learning (supervised learning) model, an unsupervised learning (unsupervised learning) model, a reinforcement learning (reinforcement learning) model, and a neural network (neural network) model. For example, FIG. 1 shows a typical neural network model. The neural network model includes a plurality of neurons (neurons), as shown by circles in FIG. 1. The neural network model includes one input layer (as shown by circles filled with slashes in FIG. 1), three hidden layers (as shown by blank circles in FIG. 1), and one output layer (as shown by circles filled with vertical lines in FIG. 1). The input layer receives a signal that is input from outside, the hidden layer and the output layer process the input signal at different stages, and the output layer outputs a final result. Each layer of the neural network model includes at least one neuron. Each neuron receives input signals transferred from another neuron. The input signals are transferred through a weighted connection. The neuron first compares a total received input value with a threshold of the neuron, and then generates an output of the neuron through activation function processing. In addition, precision of the ML model can be improved, or a capacity of the ML model can be increased by increasing data of the hidden layer in the ML model and/or increasing a quantity of neurons of the hidden layer. Herein, the neural network model is merely used as an example to describe a structure of the ML model. The supervised learning model, the unsupervised learning model, the reinforcement learning model, or the like has a same structure as the neural network model shown in FIG. 1, that is, each includes an input layer, a hidden layer, and an output layer. Herein, for "the supervised learning model, the unsupervised learning model, or the reinforcement learning model", connection relationships between adjacent layers of different models are different. In addition, the hidden layer may also be described as a "middle layer".

Generally, ML is divided into a training part and an inference (inference) part. The training part refers to a process of learning, based on a specific training dataset, an ML model for executing a specific task. The inference part refers to a process in which the ML model calculates input data to obtain an inference result. A core problem of machine learning includes model training.

### 2. Data and feature

One piece of data includes one or more features, and one feature corresponds to one value. Data describing "cell coverage quality" is used as an example. A feature of the data includes reference signal received power (reference signal received power, RSRP).

In embodiments of this application, a feature relevant to an ML task is referred to as a "relevant feature", and a feature irrelevant to an ML task is referred to as an "irrelevant feature". For example, when the ML task includes training an ML model describing "cell coverage quality", the relevant feature includes RSRP, and the irrelevant feature includes a packet delay of a terminal device, a throughput of a cell, a signal to interference plus noise ratio (signal to interference plus noise ratio, SINR), and reference signal received quality (reference signal received quality, RSRQ). In addition, the "feature" may also be described as an "attribute".

### 3. Selection method

In embodiments of this application, the selection method is used to select training data. The selection method includes a feature selection (feature selection) method. The selection method may be, for example, but is not limited to, the following methods: a relevant features (relevant features, Relief) method, an information gain (information gain, INFO GAIN) method, a multi-cluster feature selection (multi-cluster feature selection, MCFS) method, a Las Vegas wrapper (Las Vegas wrapper, LVW) method, a ridge regression (ridge regression) method, or a least absolute shrinkage operator (least absolute shrinkage and selection operator, LASSO) method.

For example, an implementation process of the relevant features method is as follows: First, a correlation between a feature and a category is obtained through calculation based on a capability of distinguishing short-distance samples based on a feature, and then different weights are assigned to features based on the correlation between a feature and a category. A feature whose weight is less than a threshold is removed.

For example, an implementation process of the information gain method is as follows: A feature is given, an information entropy of the feature is E1, and a sum of information entropies of all auxiliary features of the feature is E2. A difference between E1 and E2 is obtained through calculation. If the difference between E1 and E2 is the largest, the feature is selected.

For example, an implementation process of the multi-cluster feature selection method is as follows: A correlation between features of data is first obtained by performing spectrum analysis on a Laplacian matrix, and then a needed feature is selected by using L1 regular regression.

For example, an implementation process of the Las Vegas wrapper method is as follows: A feature subset is randomly generated from a feature set each time, and an error of a model on the feature subset is obtained by using a cross-validation method. If the error is less than a previously obtained minimum error, or is the same as the previously minimum error, but a quantity of included features is smaller, the feature subset is retained.

For example, an implementation process of the ridge regression method is as follows: For a dataset, if an L2 norm of a matrix w is given, so that a square error of the dataset is minimum, a feature corresponding to a non-zero component of the matrix w is a selected feature. The L2 norm means that a square sum of elements in a vector is first calculated, and then a square root is obtained by calculating the square sum.

For example, an implementation process of the least absolute shrinkage operator method is as follows: For a dataset, if an L1 norm of a matrix w is given, so that a square error of the dataset is minimum, a feature corresponding to a non-zero component of the matrix w is a selected feature. The L1 norm is a sum of absolute values of elements in a vector.

Implementation processes of the foregoing enumerated methods are merely examples for description. For a detailed process, refer to a conventional technology.

When the ML model is introduced into a wireless communication network, the terminal device cannot learn specific data relevant to a learning task. Therefore, data sent by the terminal device to a network device includes many features, such as RSRP, RSRQ, an SINR, a packet delay, and a cell throughput. When an ML task includes training an ML model describing "cell coverage quality", most data (for example, values of features such as the RSRQ, the SINR, the packet delay, and the cell throughput) sent by the terminal device is irrelevant to the ML task. This wastes transmission resources. In addition, storage resource overheads of the network device are also increased due to the data irrelevant to the ML task. Moreover, when there are a plurality of terminal devices, transmission resource overheads further increase. Most data provided by the terminal device is irrelevant to the ML task. An ML model obtained through training based on the data provided by the terminal device has a poor generalization capability (generalization ability) of and has limited application scenarios.

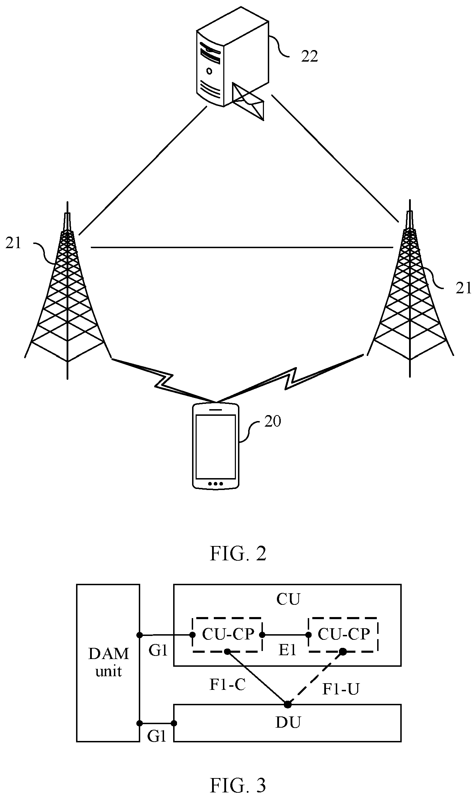

In view of this, embodiments of this application provide a data transmission method. The data transmission method in embodiments of this application is applicable to various communication systems. The data transmission method provided in embodiments of this application may be applied to a long term evolution (long term evolution, LTE) system, a fifth-generation (fifth-generation, 5G) communication network, another similar network, or another future network. FIG. 2 is a schematic diagram of an architecture of a communication system applicable to the data transmission method in embodiments of this application. The communication system may include an access network device 21, a terminal device 20 that communicates with the access network device 21, and a core network device 22 that communicates with the access network device 21. There may be one or more terminal devices 20, access network devices 21, and core network devices 22. FIG. 2 shows only one terminal device 20, two access network devices 21, and one core network device 22. FIG. 2 is merely a schematic diagram, and does not constitute any limitation on an application scenario of the data transmission method in embodiments of this application.

The terminal device 20 may also be referred to as user equipment (user equipment, UE), a terminal, an access terminal, a subscriber unit, a subscriber station, a mobile station, a remote station, a remote terminal, a mobile device, a user terminal, a wireless communication device, a user agent, a user apparatus, or the like. The terminal device may be a wireless terminal or a wired terminal. The wireless terminal may be a device having a wireless transceiver function, and may be deployed on land, including an indoor or outdoor device, a handheld device, or a vehicle-mounted device, may be deployed on a water surface (for example, on a ship), or may be deployed in the air (for example, on a plane, a balloon, or a satellite). The terminal device may be an unmanned aerial vehicle, an internet of things (internet of things, IoT) device (for example, a sensor, an electricity meter, or a water meter), a vehicle-to-everything (vehicle-to-everything, V2X) device, a station (station, ST) in a wireless local area network (wireless local area network, WLAN), a cellular phone, a cordless phone, a session initiation protocol (session initiation protocol, SIP) telephone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, or a wearable device (which may also be referred to as a wearable intelligent device). The terminal device may alternatively be a terminal in a next-generation communication system, for example, a terminal in a 5G communication system, a terminal in a future evolved public land mobile network (public land mobile network, PLMN), or a terminal in an NR communication system. This is not limited in embodiments of this application.

The core network device 22 is an apparatus that is deployed in a core network and that provides a service for the terminal device 20. In systems using different radio access technologies, core network devices having a similar wireless communication function may have different names. For example, the data transmission method in embodiments of this application is applied to a 5G system, and the core network device may be, for example, but is not limited to, an access and mobility management function (access and mobility management function, AMF) or a network data analytics function (network data analytics function, NWDAF). The AMF has functions such as mobility management, registration management, connection management, lawful interception, access authentication, and access authorization for the terminal device 20, and supports transmission of session management (session management, SM) information between the terminal device 20 and a session management function (session management function, SMF). The NWDAF can collect data from each network function (network function, NF), application function (application function, AF), and operation, administration, and maintenance (operation, administration, and maintenance, OAM), and perform network function analysis and prediction. For ease of description only, in embodiments of this application, the foregoing apparatuses that can provide a service for the terminal device 20 are collectively referred to as the core network device. An interface between the core network device and the access network device includes an NG interface.

The access network device 21 may also be referred to as a radio access network (radio access network, RAN) device, is a device that connects the terminal device to a wireless network, and may provide functions such as radio resource management, quality of service management, and data encryption and compression for the terminal device. Currently, some examples of the RAN device include: a next generation network node (next generation NodeB, gNB), an evolved NodeB (next generation evolved NodeB, Ng-eNB) connected to a next generation core network, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), or the like.

In a possible manner, the access network device 21 includes a first access network device and a second access network device. The terminal device can communicate with the first access network device or the second access network device. The terminal device can alternatively communicate with both the first access network device and the second access network device, that is, multi-radio dual connectivity (multi-radio dual connectivity, MR-DC). In an MR-DC scenario, the first access network device may include a primary access network device, the second access network device may include a secondary access network device, and the first access network device and the second access network device may be access network devices of different communication standards, or may be access network devices of a same communication standard. An interface between the first access network device and the second access network device includes an Xn interface.

In a possible manner, the access network device 21 in embodiments of this application includes a central unit (central unit, CU) and a distributed unit (distributed unit, DU), as shown in FIG. 3. There may be one or more CUs and DUs. It may be understood that the radio access network device 21 is divided into the CU and the DU by logical functions. The CU and the DU may be physically split, or may be deployed together. This is not specifically limited in embodiments of this application. The CU and the DU may be connected through an interface. The interface may include, for example, an F1 interface. The CU and the DU may be obtained through division based on protocol layers of a wireless network. For example, functions of a radio resource control (radio resource control, RRC) layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, a physical (physical, PHY) layer, and the like are set in the DU. It may be understood that, division into processing functions of the CU and the DU based on the protocol layers is merely an example, and the processing functions of the CU and the DU may alternatively be divided in another manner. This is not specifically limited in embodiments of this application.

Optionally, the CU includes a CU control plane (CU control plane, CU-CP) and a CU user plane (CU user plane, CU-UP). One CU includes one CU-CP and one or more CU-UPs. It may be understood that the CU is divided into the CU-CP and the CU-UP by logical functions. The CU-CP and the CU-UP may be obtained through division based on protocol layers of the wireless network. For example, control planes of the RRC layer and the PDCP layer are set in the CU-CP, and a user plane of the PDCP layer is set in the CU-UP. In addition, a function of the SDAP layer may alternatively be set in the CU-UP. The CU-CP and the CU-UP may be connected through an interface. The interface may include, for example, an E1 interface. The CU-CP and the DU may be connected through an F1 control plane interface (F1-C), and the CU-UP and the DU may be connected through an F1 user plane interface (F1-U). Further, the CU, the DU, or the CU-CP may be separately connected to a data analysis and management (data analysis and management, DAM) unit through a G1 interface. Optionally, the DAM unit may be used as an internal function of the CU, the DU, or the CU-CP. In this case, the G1 interface includes an internal interface and is invisible to the outside, or the G1 interface does not exist.

It may be understood that the communication system shown in FIG. 2 is merely intended to describe the technical solutions in embodiments of this application more clearly, and does not constitute a limitation on the technical solutions provided in embodiments of this application. For example, the communication system may further include another device such as a network control device (not shown in FIG. 2). The network control device may include an operation, administration, and maintenance (operation, administration, and maintenance, OAM) system, and the OAM system may also be referred to as a network management system. The network control device may manage the access network device and the core network device.

The communication system and a service scenario described in embodiments of this application are intended to describe the technical solutions in embodiments of this application more clearly, and does not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

The following describes in detail the data transmission method provided in embodiments of this application.

It should be noted that in the following embodiments of this application, names of messages between network elements, names of parameters in messages, or the like are merely examples, and may be other names during specific implementation. This is uniformly described herein, and details are not described below again.

In embodiments of this application, a data selection method performed on a terminal device side is described as a "first selection method". The first selection method may be configured by a network device, or may be independently determined by the terminal device. A selection method supported by the terminal device is described as a "second selection method".

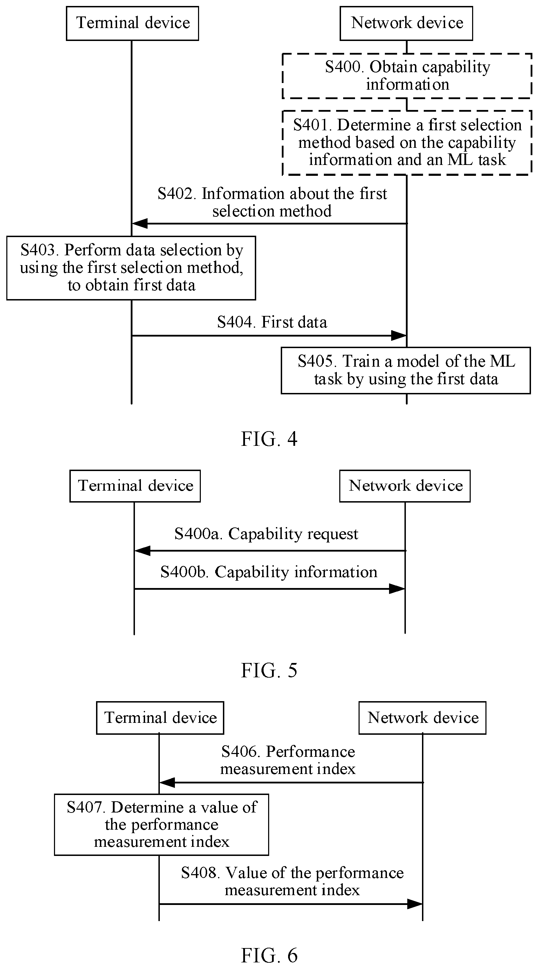

An embodiment of this application provides a data transmission method. The data transmission method is applied to a machine learning process. Refer to FIG. 4. The data transmission method includes the following steps.

S400. A network device obtains capability information.

The network device may include the foregoing access network device, core network device, or network control device. The capability information indicates a device capability of a terminal device for performing data selection. The capability information includes a second selection method and may further include at least one of a computing capability and a data capacity:
1. Computing capability: The computing capability includes a data processing capability of the terminal device, and is related to factors such as hardware configuration performance of the terminal device and running smoothness of an operating system. For example, the computing capability includes a speed when the terminal device calculates a Hash function and outputs a result, and for example, is represented by using a quantity of floating-point operations per second (floating-point operations per second, FLOPS).
2. Data capacity: The data capacity includes an amount of data that is stored by the terminal device and that is used for machine learning, and for example, is represented by using megabytes (megabytes, MBs).
3. Second selection method: The second selection method includes a selection method supported by the terminal device. The second selection method may be, for example, but is not limited to, at least one of the following: a relevant features method, an information gain method, a multi-cluster feature selection method, a Las Vegas wrapper method, a ridge regression method, or a least absolute shrinkage operator method.

A specific implementation process of S400 may be, for example, but is not limited to, the following example:
For example, the network device obtains the capability information from the terminal device, as shown in FIG. 5.
S400 includes S400a and S400b.
S400a. The network device sends a capability request to the terminal device. Correspondingly, the terminal device receives the capability request from the network device.

The capability request is used to request the capability information of the terminal device.

For example, the capability request may alternatively be replaced with a UE capability enquiry (UE capability enquiry) message. In other words, the network device sends the UE capability enquiry message to the terminal device. Correspondingly, the terminal device receives the UE capability enquiry message from the network device.

S400b. The terminal device sends the capability information to the network device. Correspondingly, the network device receives the capability information from the terminal device.

For example, the capability information is carried in a UE assistance information (UE assistance information) message or a UE capability information (UE capability information) message, to report the capability information of the terminal device to the network device.

It should be noted that S400a and S400b are both optional steps. When "S400a and S400b are not performed", the network device obtains the capability information from another network element. For example, when the network device includes the access network device, the another network element may include at least one of the following devices: a core network device, a network control device, or another access network device. For another example, when the network device implementation includes the core network device, the another network element may include at least one of the following devices: an access network device or a network control device. For another example, when the network device includes the network control device, the another network element may include at least one of the following devices: an access network device or a core network device.

When "the network device obtains the capability information from the terminal device", in an example, the terminal device may actively report the capability information of the terminal device to the network device. For example, when the terminal device determines that a first selection method needs to be obtained, S400a is not performed, and S400b is performed. In another example, the terminal device reports the capability information of the terminal device to the network device based on the capability request. In this case, S400a and S400b are performed.

S401. The network device determines the first selection method based on the capability information and an ML task. The ML task is determined by the network device. For example, in a cell coverage quality optimization scenario, the network device determines that the ML task includes training an ML model for describing "cell coverage quality". The first selection method is used to select first data relevant to the ML task. The first selection method may be, for example, but is not limited to, one of the following: a relevant features method, an information gain method, a multi-cluster feature selection method, a Las Vegas wrapper method, a ridge regression method, or a least absolute shrinkage operator method.

For example, when the capability information includes the "computing capability", the network device determines the first selection method based on the computing capability of the terminal device and the ML task. The computing capability of the terminal device is positively correlated with a data processing speed. In other words, a higher computing capability of the terminal device indicates a higher data processing speed of the terminal device. Correspondingly, a speed at which the terminal device performs the data selection is also higher. Different selection methods have different processing complexity degrees, and a selection method with a higher processing complexity degree has higher data selection precision. Therefore, the network device determines the first selection method with reference to the computing capability of the terminal device, the first selection method matches the computing capability of the terminal device, and the first data that meets model training precision can be selected.

When the capability information includes the "data capacity", the network device determines the first selection method based on the data capacity of the terminal device and the ML task. For example, when the data capacity is large, the network device determines that the first selection method includes a selection method with a high processing complexity degree, for example, the LASSO method, to improve data selection precision. On the contrary, when the data capacity is small, the network device determines that the first selection method includes a selection method with a low processing complexity degree, for example, the information gain method, to select the first data from data of a small capacity and meet a requirement of a small data capacity scenario.

When the capability information includes the "second selection method", the network device determines the first selection method based on the second selection method supported by the terminal device and the ML task, so that the terminal device successfully performs S403, to avoid a phenomenon that the "data selection" cannot be performed because the terminal device does not support the first selection method.

In other words, when determining the first selection method, the network device considers a difference between capabilities of different terminal device. The first selection methods configured by the network device for different terminal devices may be the same or may be different, to ensure that the terminal device successfully performs the data selection, and the selected first data meets an ML task requirement.

S402. The network device sends information about the first selection method to the terminal device. Correspondingly, the terminal device receives the information about the first selection method from the network device.

The information about the first selection method indicates a method for selecting the first data relevant to the ML task. A form of "the information about the first selection method" may be, for example, but is not limited to, the following four examples:
Example 1: The information about the first selection method directly indicates the first selection method. For example, the information about the first selection method includes a name of the first selection method, for example, the Las Vegas wrapper method. In this way, the terminal device may learn of a specific selection method used to perform the data selection.
Example 2: The information about the first selection method indirectly indicates the first selection method. For example, the information about the first selection method includes an identifier of the first selection method, for example, a symbol "A". In this case, different identifiers correspond to different selection methods. For example, an identifier corresponding to the relevant features method includes "D", an identifier corresponding to the information gain method includes "B", an identifier corresponding to the multi-cluster feature selection method includes "C", an identifier corresponding to the Las Vegas wrapper method includes "D", an identifier corresponding to the ridge regression method includes "E", and an identifier corresponding to the least absolute shrinkage operator method includes "F". In addition, the terminal device and the network device have a same understanding of "a correspondence between a selection method and an identifier". In this way, the terminal device may learn of, based on a received identifier, a specific selection method used to perform the data selection.
Example 3: The information about the first selection method includes first information, and corresponds to the first selection method. The first information indicates whether the terminal device uses the first selection method to perform the data selection. Optionally, when there are a plurality of first selection methods, the first information is in one-to-one correspondence with the first selection methods. For example, the first information is added to all the first selection methods, and whether to use the first selection method is distinguished based on a difference between the first information.

For example, if first information corresponding to a first selection method includes 1, the first selection method needs to be used; and if first information corresponding to a first selection method includes 0, the first selection method does not need to be used. Alternatively, on the contrary, if first information corresponding to a first selection method includes 1, the first selection method does not need to be used; and if first information corresponding to a first selection method includes 0, the first selection method needs to be used.

For another example, if first information corresponding to a first selection method includes on (on), the first selection method needs to be used; and if first information corresponding to a first selection method includes off (off), the first selection method does not need to be used. Alternatively, on the contrary, if first information corresponding to a first selection method includes off, the first selection method needs to be used; and if first information corresponding to a first selection method includes on, the first selection method does not need to be used.

For still another example, if first information corresponding to a first selection method includes true (true), the first selection method needs to be used; and if first information corresponding to a first selection method includes false (false), the first selection method does not need to be used. Alternatively, on the contrary, if first information corresponding to a first selection method includes false, the first selection method needs to be used; and if first information corresponding to a first selection method includes true, the first selection method does not need to be used. Example 4: The information about the first selection method includes second information. The second information includes information of M bits. When there are a plurality of first selection methods, for example, M first selection methods, the M bits respectively correspond to the M first selection methods. A value of a bit indicates whether the terminal device uses a first selection method corresponding to the bit. Optionally, the bits in the second information are in one-to-one correspondence with the first selection methods. For example, the second information may be represented by using a bitmap (bitmap), and the bitmap includes the M bits. In this manner, each bit in the bitmap corresponds to one first selection method. For example, if a value of a bit is set to 1, a first selection method corresponding to the bit needs to be used; and if the value of the bit is set to 0, a first selection method corresponding to the bit does not need to be used. And vice versa.

S403. The terminal device performs the data selection by using the first selection method, to obtain the first data.

For example, that the first selection method is implemented as the Las Vegas wrapper method is used as an example. A dataset D includes data that is stored by the terminal device and that is used for machine learning. A feature set A includes a feature of the dataset D. The terminal device randomly selects a feature subset A' from the feature set A each time, and then estimates an error of the feature subset A'. If the error of the feature subset A' is less than a minimum error of a feature subset that is previously obtained by the terminal device, the terminal device uses a value corresponding to the feature subset A' as the first data. Alternatively, if a difference between the error of the feature subset A' and the minimum error of the feature subset that is previously obtained by the terminal device falls within a preset range, and a quantity of features in the feature subset A' is less than a quantity of features in the feature subset that is previously obtained by the terminal device, the terminal device uses a value corresponding to the feature subset A' as the first data.

It should be noted that the foregoing data selection process may be considered as a processing process in data preprocessing (data preprocessing). The data preprocessing may further include processing such as data cleaning, to be specific, a process in which the terminal device removes abnormal data from the stored data when the data is polluted. That "the data is polluted" may mean that a value of the data exceeds a normal value range.

S404. The terminal device sends the first data to the network device. Correspondingly, the network device receives the first data from the terminal device.

S405. The network device trains a model of the ML task by using the first data.

According to the data transmission method provided in this embodiment of this application, the network device indicates the first selection method to the terminal device, so that the terminal device performs the data selection. In this case, data sent by the terminal device to the network device includes the filtered first data. The first data is relevant to the ML task. This meets an ML task requirement of the network device, and can reduce an amount of transmitted data, to reduce transmission resource overheads. In addition, a large quantity of data does not need to exist on the network device. This reduces storage resource overheads of the network device. Because the first data is relevant to the ML task, an ML model obtained through training based on the first data has a strong generalization capability. Even if the ML model is applied to another scenario, and new data is input into the ML model, the ML model can still provide an appropriate output.

In some embodiments, the network device further configures a performance measurement index for the terminal device. A value of the performance measurement index is used to measure validity of the first selection method in the ML task. In other words, the value of the performance measurement index is used to measure whether the first selection method is good or bad in the ML task. The performance measurement index is also referred to as a validity index (validity index). As shown in FIG. 6, the data transmission method in this embodiment of this application further includes S406 to S408.

S406. The network device sends the performance measurement index to the terminal device. Correspondingly, the terminal device receives the performance measurement index from the network device.

The performance measurement index includes at least one of the following: a Jaccard coefficient (Jaccard coefficient, JC), a Rand index (rand index, RI), an accuracy rate, or an error rate. For example, the performance measurement index is carried in a verification result request. The verification result request is used to request the value of the performance measurement index. The performance measurement index is described as follows:
First, a correspondence between the "data" in the foregoing steps (for example, S400 and S403) and a "dataset" in the performance measurement index in the ML task is described. In the descriptions of the performance measurement index, a dataset A includes data, that is, the first data, obtained after the terminal device performs the data selection. A dataset B includes a reference dataset, including reference data used to evaluate whether the first selection method is good or bad. The dataset B is pre-deployed in the terminal device, or is sent by the network device to the terminal device. A dataset D includes data that is stored by the terminal device and that is used for machine learning Data in the dataset A comes from the dataset D.

Then, each performance measurement index is described.
1. Jaccard coefficient: The JC includes a ratio of a size of an intersection set of the dataset A and the dataset B to a size of a union set of the dataset A and the dataset B. The JC meets the following formula: $JC = \left(Size of the intersection set of A and B\right) / \left(Size of the union set of A and B\right)$ For detailed descriptions of the JC, refer to the conventional technology. Details are not described herein.
2. Rand index: The RI meets the following formula: $RI = \left(a+b\right) / c$ where a includes a quantity of sample pairs that belong to both the dataset A and the dataset B, b includes a quantity of sample pairs that do not belong to either the dataset A or the dataset B, and c includes a total quantity of sample pairs.
3. Accuracy rate: The accuracy rate is a ratio of a quantity of values that belong to the dataset A and that are in the dataset D to a quantity of values in the dataset D.
4. Error rate: The error rate is a ratio of a quantity of values that do not belong to the dataset A and that are in the dataset D to the quantity of the values in the dataset D.

S407. The terminal device determines the value of the performance measurement index.

For example, the performance measurement index includes the "Jaccard coefficient", the terminal device calculates, by using the formula (1), that a value of the Jaccard coefficient of the first data is 0.5. The first data includes the data selected by the terminal device in S403.

S408. The terminal device sends the value of the performance measurement index to the network device. Correspondingly, the network device receives the value of the performance measurement index from the terminal device.

It should be noted that the performance measurement index and the information about the first selection method may be carried in a same message, or may be carried in different messages. The value of the performance measurement index and the first data may be carried in a same message, or may be carried in different messages. This is not limited in this embodiment of this application.

In this way, because the value of the performance measurement index can represent the validity of the first selection method in the ML task, the network device allocates a weight to the first data of the terminal device based on the value of the performance measurement index. A smaller value of a performance measurement index that is provided by a terminal device indicates poorer validity of first data of the terminal device in the ML task. Correspondingly, a weight of the first data of the terminal device is smaller. For example, a value of a Jaccard coefficient that is provided by a terminal device 1 includes 0.5, and a value of a Jaccard coefficient that is provided by a terminal device 2 includes 0.6. In this case, a weight allocated by the network device to first data of the terminal device 1 includes 0.01, and a weight allocated by the network device to first data of the terminal device 2 includes 0.02. In this way, the network device performs ML model training based on the first data and the weight, to further improve a generalization capability of the ML model.

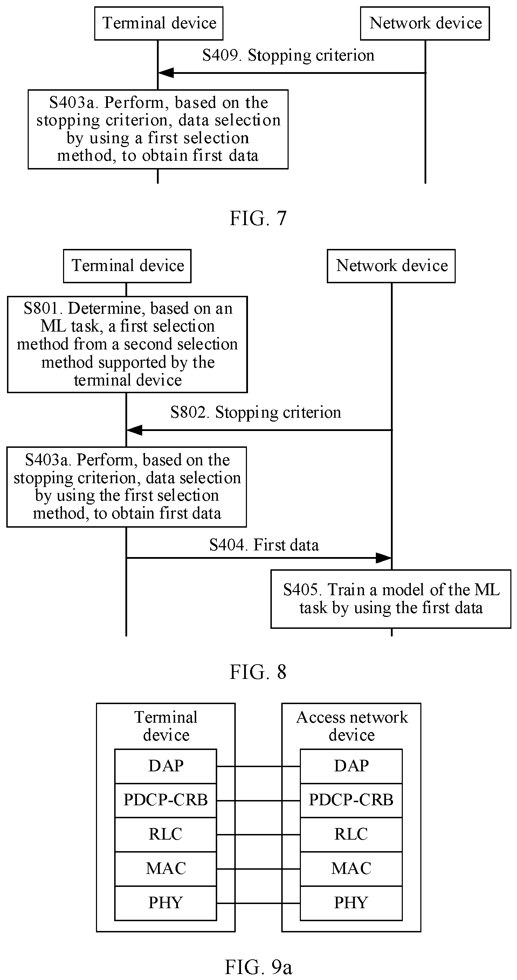

In some embodiments, the network device further configures a stopping criterion (stopping criterion) for the terminal device, to indicate a condition that needs to be met when the terminal device stops the data selection. As shown in FIG. 7, the data transmission method in this embodiment of this application further includes S409.

S409. The network device sends the stopping criterion to the terminal device. Correspondingly, the terminal device receives the stopping criterion from the network device.

The stopping criterion indicates the condition that needs to be met when the terminal device stops the data selection. The stopping criterion includes at least one of the following:
1. Feature quantity: The feature quantity includes a quantity of features of the first data.
2. Quantity of iterations: The quantity of iterations includes a quantity of iterations performed by the terminal device by using the first selection method during the data selection. When a quantity of iterations in a process in which the terminal device performs the data selection meets the quantity of iterations in the stopping criterion, the terminal device obtains the first data.
3. Iteration performance condition: The iteration performance condition includes a value of a performance measurement index that needs to be met when the terminal device stops the data selection by using the first selection method. The "value of the performance measurement index" in the iteration performance condition may include a value of a performance measurement index of data selected in one iteration. The "value of the performance measurement index" in the iteration performance condition may alternatively include a value of an iteration improvement percentage of the performance measurement index, for example, compared with a value of a performance measurement index of data selected in a previous iteration, an iteration improvement percentage of a value of a performance measurement index of data selected in a current iteration.

When the terminal device performs S409, S403 includes S403a.

S403a. The terminal device performs, based on the stopping criterion, the data selection by using the first selection method, to obtain the first data.

For example, when the stopping criterion includes the "feature quantity", the terminal device performs the data selection by using the first selection method. If a feature quantity of data already selected by the terminal device meets the "feature quantity" indicated in the stopping criterion, the terminal device stops the data selection, and the already selected data includes the first data, to reduce data selection time of the terminal device and data processing resource overheads. On the contrary, if the feature quantity of the data already selected by the terminal device does not meet the "feature quantity" indicated in the stopping criterion, the terminal device continues to perform the data selection until the feature quantity of the already selected data meets the "feature quantity" indicated in the stopping criterion, to meet the ML task requirement.

When the stopping criterion includes the "quantity of iterations", the "data selection" process includes a plurality of iterations. The terminal device records a quantity of performed iterations. If a quantity of iterations performed by the terminal device meets the "quantity of iterations" indicated in the stopping criterion, the terminal device stops the data selection, and the already selected data includes the first data, to reduce the data selection time of the terminal device and the data processing resource overheads. On the contrary, if the quantity of iterations performed by the terminal device does not meet the "quantity of iterations" indicated in the stopping criterion, the terminal device continues to perform the data selection until the quantity of iterations meets the "quantity of iterations" indicated in the stopping criterion, to meet the ML task requirement. For example, the data stored by the terminal device includes 1000 samples, a quantity of samples when the terminal device performs the data selection in each round is 20, and the terminal device performs 10 rounds of data selection. In this case, the quantity of iterations performed by the terminal device is 10 * (1000/20) = 500. If the stopping criterion indicates that the "quantity of iterations" is 490, the terminal device stops the data selection process after performing 490 iterations, and does not need to complete 500 iterations.

When the stopping criterion includes the "iteration performance condition", in a possible example, when the "value of the performance measurement index" in the iteration performance condition includes "a value of a performance measurement index of data selected in one iteration", in a process in which the terminal device performs the data selection, if data selected by the terminal device in a current iteration meets the value of the iteration measurement indicator, the terminal device stops the iteration, that is, stops the data selection process, to reduce the data selection time of the terminal device and the data processing resource overheads. In another possible example, when the "value of the performance measurement index" in the iteration performance condition includes a "value of an iteration improvement percentage of the performance measurement index", for example, "an iteration improvement percentage of a JC coefficient is 10%", in a process in which the terminal device performs the data selection, a value of a JC coefficient of data selected in a previous iteration is 0.5, a JC coefficient of data selected in a current iteration is 0.6, and the performance improvement percentage is 20%, which meets the stopping criterion, the terminal device stops the data selection process, to reduce the data selection time of the terminal device and the data processing resource overheads.

It should be noted that when the stopping criterion includes the foregoing two pieces of information (for example, any two of the feature quantity, the quantity of iterations, and the iteration performance condition) or three pieces of information (that is, the feature quantity, the quantity of iterations, and the iteration performance condition), in a process of performing S403, if the terminal device determines that any one of the foregoing information (that is, any one of the feature quantity, the quantity of iterations, and the iteration performance condition) is met, the terminal device may stop the data selection.

The foregoing describes the data transmission method in embodiments of this application by using an example in which "the network device configures the first selection method for the terminal device". The following describes the data transmission method in embodiments of this application by using an example in which "the terminal device independently determines the first selection method". Refer to FIG. 8. A data transmission method according to an embodiment of this application includes the following steps.

S801. A terminal device determines, based on an ML task, a first selection method from a second selection method supported by the terminal device.

The ML task is configured by the network device. Refer to related descriptions of S401. Details are not described herein again. The first selection method is used to select first data relevant to the ML task. For descriptions of the "first selection method", refer to related descriptions of S401. For descriptions of the "second selection method", refer to related descriptions of S400. Details are not described herein again.

For example, the terminal device determines, based on at least one of a computing capability and a data capacity of the terminal device, the first selection method from the second selection method supported by the terminal device. For descriptions of the "capability information" and the "data capacity", refer to related descriptions of S400. Details are not described herein again.

S802. The network device sends a stopping criterion to the terminal device. Correspondingly, the terminal device receives the stopping criterion from the network device.

The stopping criterion indicates a condition that needs to be met when the terminal device stops data selection. For descriptions of the "stopping criterion", refer to related descriptions of S409. Details are not described herein again. It should be noted that the terminal device may first perform S801 and then perform S802, the terminal device may first perform S802 and then perform S801, or the terminal device may simultaneously perform S801 and S802. This is not limited in the data transmission method in this embodiment of this application.

After the terminal device receives the stopping criterion, the terminal device performs S403a and S404, and the network device performs S404 and S405, to complete the ML task.

In this way, the terminal device independently determines the first selection method, to perform the data selection. In this case, data sent by the terminal device to the network device includes the filtered first data. The first data is relevant to the ML task. This meets an ML task requirement of the network device, and can reduce an amount of transmitted data, to reduce transmission resource overheads. In addition, a large quantity of data does not need to exist on the network device. This reduces storage resource overheads of the network device. Because the first data is relevant to the ML task, an ML model obtained through training based on the first data has a strong generalization capability. Even if the ML model is applied to another scenario, and new data is input into the ML model, the ML model can still provide an appropriate output.

It should be noted that, in the foregoing interaction steps (for example, S400a, S400b, S402, S404, S406, S408, S409, or S802) between the terminal device and the network device, the terminal device and the network device may send related information (for example, the capability request, the capability information, the information about the first selection method, the first data, the performance measurement index, the value of the performance measurement index, and the stopping criterion) based on an existing protocol stack. When the network device includes an access network device, the related information is carried in an RRC message. When the network device includes a core network device, the related information is carried in a NAS message. Alternatively, the terminal device and the network device may send the related information based on a new protocol stack.

For example, when the network device includes an access network device, the terminal device and the access network device may send the related information by using a dedicated protocol (for example, a data analytics protocol (data analytics protocol, DAP)), to implement functions such as segmentation, sorting, integrity protection, and encryption and decryption for the related information. Herein, a PDCP layer is relevant to a dedicated radio bearer (for example, a computing radio bearer (computing radio bearer, CRB)), to implement orderly sending, encryption and decryption, repetition detection, and the like for the foregoing related information. FIG. 9a shows a protocol stack between the terminal device and the access network device. The protocol stack is used to transmit the foregoing related information between the terminal device and the access network device. The protocol stack mainly includes a DAP layer, a PDCP layer, an RLC layer, a MAC layer, and a PHY layer. The DAP layer, the PDCP layer, the RLC layer, the MAC layer, and the PHY layer all belong to an access stratum (access stratum, AS).

The CRB and functions of the CRB are described as follows.

The PDCP may establish a radio bearer, that is, the CRB, used to transmit calculated data. It should be understood that, the name herein is merely an example name, and the name of the radio bearer is not specifically limited. A size of a packet transmitted through the CRB, a quality of service (quality of service, QoS) level of the CRB, and the like are applicable to the calculated data.

For example, the CRB and an SRB/a DRB may use different logical channel identifiers (logical channel identifiers, LCIDs). For example, the CRB may use a reserved (reserved) LCID value in a downlink-shared channel (downlink-shared channel, DL-SCH)/an uplink downlink-shared channel (uplink-shared channel, UL-SCH) in a 3rd generation partnership project (3rd generation partnership project, 3GPP) standard.

A QoS characteristic of the CRB may also be different from that of the SRB/DRB. For example, the QoS level of the CRB may be lower than that of the SRB/DRB. For another example, the SRB does not have a packet delay budget (packet delay budget, PDB), and the CRB may have a PDB, and so on.

The CRB and the SRB/DRB transmit different information. For example, information carried by the SRB is signaling, the DRB carries user application layer data from the terminal device and a data network, and the CRB carries calculated data in a wireless network, for example, data relevant to an ML task. For another example, a data amount of the information carried by the SRB is small, but the CRB may not be limited to a data amount. For still another example, when the SRB transmits information, charging of the terminal device is involved, but when the CRB transmits information, charging of the terminal device may not be involved.

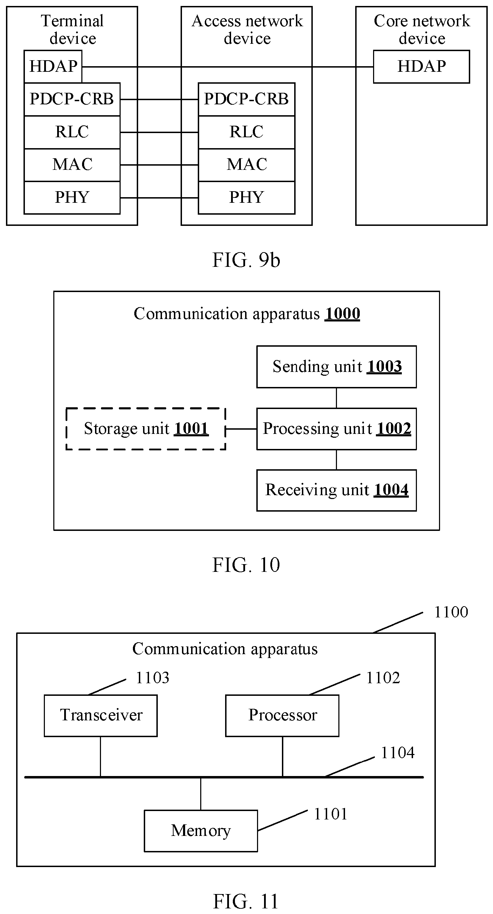

In addition, if data transmitted through the CRB is calculated data of an access network device, data transmission of the CRB may be terminated by the access network device, that is, the calculated data transmitted through the CRB may not be transmitted back to a core network device. In comparison with transmitting the calculated data through the DRB, transmitting the calculated data through the CRB has a relatively short transmission path, so that a transmission delay can be reduced. In addition, when the calculated data is transmitted through the CRB, charging of the terminal device is not affected. If data transmitted through the CRB is calculated data of the core network (core network, CN) device, the data transmission of the CRB may be terminated by a 3GPP core network device, that is, the calculated data transmitted through the CRB may not be transmitted to a data network other than the 3GPP network. For example, the PDCP layer may include a sublayer configured to implement functions such as data transmission of calculated data, encryption and decryption of calculated data, and repetition detection. For ease of description, the sublayer that supports functions such as the data transmission of the calculated data, the encryption and decryption of the calculated data, and the repetition detection at the PDCP layer may be referred to as a "PDCP-CRB" sublayer, as shown in FIG. 9b.

For another example, when the network device includes the core network device, the terminal device and the core network device may send the related information by using a dedicated protocol (for example, a high data analytics protocol (high data analytics protocol, HDAP)), to implement functions such as segmentation, sorting, integrity protection, and encryption and decryption for the related information. FIG. 9b shows a protocol stack between the terminal device and the core network device. Similarly, the protocol stack is used to transmit the foregoing related information between the terminal device and the core network device. The protocol stack mainly includes the HDAP layer. It should be noted that, in FIG. 9b, a protocol stack for interaction between the access network device and the core network device is omitted. For descriptions of the protocol stack for interaction between the terminal device and the access network device, refer to related descriptions in FIG. 9a. Details are not described herein again.

The foregoing mainly describes the solutions provided in embodiments of this application from a perspective of interaction between network elements. Correspondingly, embodiments of this application further provide a communication apparatus. The communication apparatus may be the network element in the foregoing method embodiments, an apparatus including the foregoing network element, or a component that can be used in the network element. It may be understood that, to implement the foregoing functions, the communication apparatus includes a hardware structure and/or a software module for performing a corresponding function. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In a possible embodiment, FIG. 10 is a schematic diagram of a structure of a communication apparatus 1000. The communication apparatus 1000 includes a processing unit 1002, a sending unit 1003, and a receiving unit 1004.

For example, the communication apparatus 1000 includes the terminal device in FIG. 4 in the foregoing method embodiment. The receiving unit 1004 is configured to receive information about a first selection method from a network device. The information about the first selection method indicates a method for selecting first data relevant to a machine learning ML task. The processing unit 1002 is configured to perform data selection by using the first selection method, to obtain the first data. The sending unit 1003 is configured to send the first data to the network device.

According to this disclosure, the sending unit 1003 is further configured to send capability information to the network device. The capability information is used to determine the first selection method.

In a possible design, the receiving unit 1004 is further configured to receive a performance measurement index from the network device. The sending unit 1003 is further configured to send a value of the performance measurement index to the network device.

In a possible design, the receiving unit 1004 is further configured to receive a stopping criterion from the network device. The stopping criterion indicates a condition that needs to be met when the communication apparatus stops data selection. The processing unit 1002 is specifically configured to perform, based on the stopping criterion, the data selection by using the first selection method, to obtain the first data.

For another example, the communication apparatus 1000 includes the terminal device in FIG. 8 in the foregoing method embodiment. The processing unit 1002 is configured to determine, based on a machine learning ML task, a first selection method from a second selection method supported by the terminal device. The first selection method is used to select first data relevant to the machine learning ML task. The receiving unit 1004 is configured to receive a stopping criterion from a network device. The stopping criterion indicates a condition that needs to be met when the communication apparatus stops data selection. The processing unit 1002 is further configured to perform, based on the stopping criterion, the data selection by using the first selection method, to obtain the first data. Then, the sending unit 1003 is configured to send the first data to the network device.

For example, the communication apparatus 1000 includes the network device in FIG. 4 in the foregoing method embodiment. The sending unit 1003 is configured to send information about a first selection method to a terminal device. The information about the first selection method indicates a method for selecting first data relevant to a machine learning ML task. The receiving unit 1004 is configured to receive the first data from the terminal device. The processing unit 1002 is configured to train a model of the ML task based on the first data.

According to this disclosure, the receiving unit 1004 is further configured to receive capability information from the terminal device. The capability information indicates a device capability of the terminal device for performing data selection. The processing unit 1002 is further configured to determine the first selection method based on the capability information and the ML task.

In a possible design, the sending unit 1003 is further configured to send a performance measurement index to the terminal device. The receiving unit 1004 is further configured to receive a value of the performance measurement index from the terminal device. The value of the performance measurement index is used to determine validity of the first selection method in the ML task.

In a possible design, the sending unit 1003 is further configured to send a stopping criterion to the terminal device. The stopping criterion indicates a condition that needs to be met when the terminal device stops the data selection. The first data includes data obtained by the terminal device through the data selection.

For another example, the communication apparatus 1000 includes the network device in FIG. 8 in the foregoing method embodiment. The sending unit 1003 is configured to send a stopping criterion to a terminal device. The stopping criterion indicates a condition that needs to be met when the terminal device stops data selection. Then, the receiving unit 1004 is configured to receive first data from the terminal device. The first data includes data obtained by the terminal device through data selection and is relevant to a machine learning ML task. The processing unit 1002 is configured to train a model of the ML task based on the first data.

All related content of the steps in the foregoing method embodiments may be referenced to function descriptions of corresponding functional modules. Details are not described herein again.

It should be understood that the processing unit 1002 in this embodiment of this application may be implemented by a processor or a processor-related circuit component, and the sending unit 1003 may be implemented by a transmitter or a transmitter-related circuit component. The receiving unit 1004 may be implemented by a receiver or a receiver-related circuit component.

Optionally, the communication apparatus 1000 may further include a storage unit 1001, configured to store program code and data of the communication apparatus 1000. The data may include but is not limited to original data, intermediate data, or the like.

The processing unit 1002 may be a processor or a controller, such as a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or a combination thereof. The processing unit may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The sending unit 1003 and the receiving unit 1004 may include a communication interface, a transceiver, a transceiver circuit, or the like. The communication interface is a collective name. In specific implementation, the communication interface may include a plurality of interfaces.

The storage unit 1001 may include a memory.

In another possible embodiment, an embodiment of this application provides a chip. The chip includes a logic circuit and an input/output interface. The input/output interface is configured to communicate with a module other than the chip. The logic circuit is configured to perform an operation other than receiving and sending operations of the terminal device in the foregoing method embodiments.

For example, the chip implements a function of the terminal device in FIG. 4 in the foregoing method embodiment. The input/output interface performs S402 and S404 on the terminal device side, and/or the input/output interface is further configured to perform other receiving and sending steps on the terminal device side in embodiments of this application. The logic circuit is configured to perform S403 on the terminal device side in embodiments of this application, and/or the logic circuit is further configured to perform another processing step on the terminal device side in embodiments of this application.

For another example, the chip implements a function of the terminal device in FIG. 8 in the foregoing method embodiment. The input/output interface performs S802 and S404 on the terminal device side, and/or the input/output interface is further configured to perform other receiving and sending steps on the terminal device side in embodiments of this application. The logic circuit is configured to perform S801 and S403a on the terminal device side, and/or the logic circuit is further configured to perform another processing step on the terminal device side in embodiments of this application.

For example, the chip implements a function of the network device in FIG. 4 in the foregoing method embodiment. The input/output interface performs S402 and S404 on the network device side, and/or the input/output interface is further configured to perform other receiving and sending steps on the network device side in embodiments of this application. The logic circuit is configured to perform S400, S401, and S405 on the network device side in embodiments of this application, and/or the logic circuit is further configured to perform another processing step on the network device side in embodiments of this application.

For another example, the chip implements a function of the network device in FIG. 8 in the foregoing method embodiment. The input/output interface performs S802 and S404 on the network device side, and/or the input/output interface is further configured to perform other receiving and sending steps on the network device side in embodiments of this application. The logic circuit is configured to perform S405 on the network device side, and/or the logic circuit is configured to perform another processing step on the network device side.

When the processing unit 1002 includes a processor, the sending unit 1003 and the receiving unit 1004 include a communication interface, and the storage unit 1001 includes a memory, a communication apparatus 1100 in an embodiment of this application may be shown in FIG. 11.

Refer to FIG. 11. The communication apparatus 1100 includes a processor 1102, a transceiver 1103, and a memory 1101.

The transceiver 1103 may be an independently disposed transmitter, and the transmitter may be configured to send information to another device. Alternatively, the transceiver may be an independently disposed receiver, and is configured to receive information from another device. Alternatively, the transceiver may be a component integrating functions of sending and receiving information. A specific implementation of the transceiver is not limited in embodiments of this application.

Optionally, the communication apparatus 1100 may further include a bus 1104. The transceiver 1103, the processor 1102, and the memory 1101 may be connected to each other through the bus 1104. The bus 1104 may include a peripheral component interconnect (peripheral component interconnect, PCI) bus, an extended industry standard architecture (extended industry standard architecture, EISA) bus, or the like. The bus 1104 may be classified into an address bus, a data bus, a control bus, and the like. For ease of representation, only one bold line is used to represent the bus in FIG. 11, but this does not mean that there is only one bus or only one type of bus.

A person of ordinary skill in the art may understand that all or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may include a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may include any usable medium accessible by a computer, or a data storage device, such as a server or a data center, integrating one or more usable media. The usable medium may include a magnetic medium (for example, a floppy disk, a hard disk, or a magnetic tape), an optical medium (for example, a digital video disc (digital video disk, DVD)), a semiconductor medium (for example, a solid state disk (solid state disk, SSD)), or the like.

In the several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network device. Some or all of the units may be selected based on an actual requirement to achieve the objectives of the solutions of embodiments.

In addition, functional units in embodiments of this application may be integrated into one processing unit, or each of the functional units may exist alone physically, or two or more units are integrated into one unit. The integrated unit may be implemented in a form of hardware, or may be implemented in a form of hardware in addition to a software functional unit.

Based on the foregoing descriptions of the implementations, a person skilled in the art may clearly understand that this application may be implemented by software in addition to necessary universal hardware or by hardware only. In most circumstances, the former is a better implementation. Based on such an understanding, the technical solutions of this application essentially or the part contributing to the conventional technology may be implemented in a form of a software product. The computer software product is stored in a readable storage medium, such as a floppy disk, a hard disk, or an optical disc of a computer, and includes several instructions for instructing a computer device (which may include a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.
application shall fall within the protection scope of this application. Therefore, the protection scope of this application shall be subject to the protection scope of the claims.

## Claims

1. A data transmission method, comprising:
sending, by a terminal device, capability information to a network device, wherein the capability information comprises a second selection method, wherein the second selection method comprises a selection method supported by the terminal device, and the capability information is usable, at the network device, to determine a first selection method;
receiving, by the terminal device, information about the first selection method from the network device, wherein the information about the first selection method indicates a method for selecting first data relevant to a machine learning ML task, wherein the first data is usable, at the network device, to train a model of the ML task;
performing, by the terminal device, data selection by using the first selection method, to obtain the first data; and
sending, by the terminal device, the first data to the network device.

2. The method according to claim 1, wherein the capability information further comprises at least one of the following: a computing capability and a data capacity, wherein
the computing capability comprises a data processing capability of the terminal device; and
the data capacity comprises an amount of data that is stored by the terminal device and that is used for machine learning.

3. The method according to any one of claims 1 or 2, wherein the method further comprises:
receiving, by the terminal device, a performance measurement index from the network device; and
sending, by the terminal device, a value of the performance measurement index to the network device.

4. The method according to claim 3, wherein the performance measurement index comprises at least one of the following: a Jaccard coefficient JC, a Rand index RI, an accuracy rate, or an error rate.

5. The method according to any one of claims 1 to 4, wherein the method further comprises:
receiving, by the terminal device, a stopping criterion from the network device, wherein the stopping criterion indicates a condition that needs to be met when the terminal device stops the data selection; and
the performing, by the terminal device, data selection by using the first selection method, to obtain first data comprises:
performing, by the terminal device based on the stopping criterion, the data selection by using the first selection method, to obtain the first data.

6. The method according to claim 5, wherein the stopping criterion comprises at least one of the following: a feature quantity, a quantity of iterations, or an iteration performance condition, wherein
the feature quantity comprises a quantity of features of the first data;
the quantity of iterations comprises a quantity of iterations performed by the terminal device by using the first selection method during the data selection; and
the iteration performance condition comprises a value of a performance measurement index that needs to be met when the terminal device stops the data selection by using the first selection method.

7. The method according to any one of claims 1 to 6, wherein the first selection method comprises one of the following: a relevant features method, an information gain method, a multi-cluster feature selection method, a Las Vegas wrapper method, a ridge regression method, or a least absolute shrinkage operator method.

8. A data transmission method, comprising:
receiving, by a network device, capability information from a terminal device, wherein the capability information indicates a device capability of the terminal device for performing data selection and the capability information comprises a second selection method, wherein the second selection method comprises a selection method supported by the terminal device;
determining, by the network device, a first selection method based on the capability information and a machine learning, ML, task;
sending, by the network device, information about the first selection method to the terminal device, wherein the information about the first selection method indicates a method for selecting first data relevant to the ML task; and
receiving, by the network device, the first data from the terminal device, wherein the first data is used to train a model of the ML task.

9. A communication apparatus, wherein the communication apparatus is a terminal device, comprising:
a receiving unit, configured to receive information about a first selection method from a network device, wherein the information about the first selection method indicates a method for selecting first data relevant to a machine learning ML task, wherein the first data is usable, at the network device, to train a model of the ML task;
a processing unit, configured to perform data selection by using the first selection method, to obtain the first data; and
a sending unit, configured to send the first data to the network device, wherein the sending unit is further configured to send capability information to the network device, wherein the capability information comprises a second selection method, wherein the second selection method comprises a selection method supported by the terminal device and the capability information is usable, at the network device, to determine the first selection method.

10. A communication apparatus, wherein the communication apparatus is a network device, comprising:
a sending unit, configured to send information about a first selection method to a terminal device, wherein the information about the first selection method indicates a method for selecting first data relevant to a machine learning ML task;
a receiving unit, configured to receive the first data from the terminal device; and
a processing unit, configured to train a model of the ML task based on the first data;
wherein the receiving unit is further configured to receive capability information from the terminal device, wherein the capability information indicates a device capability of the terminal device for performing data selection and the capability information comprises a second selection method, wherein the second selection method comprises a selection method supported by the terminal device; and
wherein the processing unit is further configured to determine the first selection method based on the capability information and the ML task.

11. A communication apparatus, comprising a processor and a memory, wherein the processor is coupled to the memory, the memory stores program instructions, and when the program instructions stored in the memory are executed by the processor, the data transmission method according to any one of claims 1 to 7 is performed, wherein the communication apparatus is a terminal device, or the data transmission method according to claim 8 is performed, wherein the communication apparatus is a network device.

12. A chip, wherein the chip comprises a logic circuit and an input/output interface, the input/output interface is configured to communicate with a module other than the chip, and the logic circuit is configured to run a computer program or instructions, to control a terminal device to perform the data transmission method according to any one of claims 1 to 7 or to control a network device to perform the data transmission method according to claim 8.

13. A computer-readable storage medium, wherein the computer-readable storage medium stores a program, and when the program is invoked by a processor of a terminal device, the data transmission method according to any one of claims 1 to 7 is performed, or, when the program is invoked by a processor of a network device the data transmission method according to claim 8 is performed.

## Patentansprüche

1. Datenübertragungsverfahren, umfassend:
Senden, durch ein Endgerät, von Kapazitätsinformationen an ein Netzgerät, wobei die Kapazitätsinformationen ein zweites Auswahlverfahren umfassen, wobei das zweite Auswahlverfahren ein von dem Endgerät unterstütztes Auswahlverfahren umfasst und die Kapazitätsinformationen an dem Netzgerät dazu verwendbar sind, ein erstes Auswahlverfahren zu bestimmen;
Empfangen, durch das Endgerät, von Informationen über das erste Auswahlverfahren von dem Netzgerät, wobei die Informationen über das erste Auswahlverfahren ein Verfahren zum Auswählen erster Daten angeben, die für eine Aufgabe des maschinellen Lernens (ML) relevant sind, wobei die ersten Daten an dem Netzgerät dazu verwendbar sind, ein Modell der ML-Aufgabe zu trainieren;
Durchführen, durch das Endgerät, der Datenauswahl unter Verwendung des ersten Auswahlverfahrens, um die ersten Daten zu erhalten; und
Senden, durch das Endgerät, der ersten Daten an das Netzgerät.

2. Verfahren nach Anspruch 1, wobei die Kapazitätsinformationen ferner mindestens eines der Folgenden umfassen: eine Rechenkapazität und eine Datenkapazität, wobei
die Rechenkapazität eine Datenverarbeitungskapazität des Endgeräts umfasst; und
die Datenkapazität eine Menge von Daten umfasst, die von dem Endgerät gespeichert und für maschinelles Lernen verwendet wird.

3. Verfahren nach einem der Ansprüche 1 oder 2, wobei das Verfahren ferner Folgendes umfasst:
Empfangen, durch das Endgerät, eines Leistungsmessindex von dem Netzgerät; und
Senden, durch das Endgerät, eines Werts des Leistungsmessindex an das Netzgerät.

4. Verfahren nach Anspruch 3, wobei der Leistungsmessindex mindestens eines der Folgenden umfasst: einen Jaccard-Koeffizienten JC, einen Rand-Index RI, eine Genauigkeitsrate oder eine Fehlerrate.

5. Verfahren nach einem der Ansprüche 1 bis 4, wobei das Verfahren ferner Folgendes umfasst:
Empfangen, durch das Endgerät, eines Stoppkriteriums von dem Netzgerät, wobei das Stoppkriterium eine Bedingung angibt, die erfüllt sein muss, wenn das Endgerät die Datenauswahl stoppt; und
das Durchführen, durch das Endgerät, der Datenauswahl unter Verwendung des ersten Auswahlverfahrens, um die ersten Daten zu erhalten, Folgendes umfasst:
Durchführen, durch das Endgerät basierend auf dem Stoppkriterium, der Datenauswahl unter Verwendung des ersten Auswahlverfahrens, um die ersten Daten zu erhalten.

6. Verfahren nach Anspruch 5, wobei das Stoppkriterium mindestens eines der Folgenden umfasst: eine Merkmalsmenge, eine Menge von Iterationen oder eine Iterationsleistungsbedingung, wobei die Merkmalsmenge eine Menge von Merkmalen der ersten Daten umfasst;
die Menge von Iterationen eine Menge von Iterationen umfasst, die von dem Endgerät unter Verwendung des ersten Auswahlverfahrens während der Datenauswahl durchgeführt werden; und
die Iterationsleistungsbedingung einen Wert eines Leistungsmessindex umfasst, der erfüllt sein muss, wenn das Endgerät die Datenauswahl unter Verwendung des ersten Auswahlverfahrens stoppt.

7. Verfahren nach einem der Ansprüche 1 bis 6, wobei das erste Auswahlverfahren eines der Folgenden umfasst: ein relevantes Merkmalsverfahren, ein Verfahren zur Informationsgewinnung, ein Multi-Cluster-Merkmalsauswahlverfahren, ein Las-Vegas-Wrapper-Verfahren, ein Ridge-Regressions-Verfahren oder ein Least-Absolute-Shrinkage-Operator-Verfahren.

8. Datenübertragungsverfahren, umfassend:
Empfangen, durch ein Netzgerät, von Kapazitätsinformationen von einem Endgerät, wobei die Kapazitätsinformationen eine Gerätekapazität des Endgeräts zum Durchführen der Datenauswahl angeben und die Kapazitätsinformationen ein zweites Auswahlverfahren umfassen, wobei das zweite Auswahlverfahren ein von dem Endgerät unterstütztes Auswahlverfahren umfasst;
Bestimmen, durch das Netzgerät, eines ersten Auswahlverfahrens basierend auf den Kapazitätsinformationen und einer Aufgabe des maschinellen Lernens (ML);
Senden, durch das Netzgerät, von Informationen über das erste Auswahlverfahren an das Endgerät, wobei die Informationen über das erste Auswahlverfahren ein Verfahren zum Auswählen erster Daten, die für die ML-Aufgabe relevant sind, angeben; und
Empfangen, durch das Netzgerät, der ersten Daten von dem Endgerät, wobei die ersten Daten dazu verwendet werden, ein Modell der ML-Aufgabe zu trainieren.

9. Kommunikationsvorrichtung, wobei die Kommunikationsvorrichtung ein Endgerät ist, das Folgendes umfasst:
eine Empfangseinheit, die dazu konfiguriert ist, Informationen über ein erstes Auswahlverfahren von einem Netzgerät zu empfangen, wobei die Informationen über das erste Auswahlverfahren ein Verfahren zum Auswählen erster Daten, die für eine Aufgabe des maschinellen Lernens (ML) relevant sind, angeben, wobei die ersten Daten an dem Netzgerät dazu verwendbar sind, ein Modell der ML-Aufgabe zu trainieren;
eine Verarbeitungseinheit, die dazu konfiguriert ist, eine Datenauswahl unter Verwendung des ersten Auswahlverfahrens durchzuführen, um die ersten Daten zu erhalten; und
eine Sendeeinheit, die dazu konfiguriert ist, die ersten Daten an das Netzgerät zu senden, wobei die Sendeeinheit ferner dazu konfiguriert ist, Kapazitätsinformationen an das Netzgerät zu senden, wobei die Kapazitätsinformationen ein zweites Auswahlverfahren umfassen, wobei das zweite Auswahlverfahren ein von dem Endgerät unterstütztes Auswahlverfahren umfasst und die Kapazitätsinformationen auf dem Netzgerät dazu verwendbar sind, das erste Auswahlverfahren zu bestimmen.

10. Kommunikationsvorrichtung, wobei die Kommunikationsvorrichtung ein Netzgerät ist, das Folgendes umfasst:
eine Sendeeinheit, die dazu konfiguriert ist, Informationen über ein erstes Auswahlverfahren an ein Endgerät zu senden, wobei die Informationen über das erste Auswahlverfahren ein Verfahren zum Auswählen erster Daten, die für eine Aufgabe des maschinellen Lernens (ML) relevant sind, angeben;
eine Empfangseinheit, die dazu konfiguriert ist, die ersten Daten von dem Endgerät zu empfangen; und
eine Verarbeitungseinheit, die dazu konfiguriert ist, ein Modell der ML-Aufgabe basierend auf den ersten Daten zu trainieren;
wobei die Empfangseinheit ferner dazu konfiguriert ist, Kapazitätsinformationen von dem Endgerät zu empfangen, wobei die Kapazitätsinformationen eine Gerätekapazität des Endgeräts zum Durchführen der Datenauswahl angeben und die Kapazitätsinformationen ein zweites Auswahlverfahren umfassen, wobei das zweite Auswahlverfahren ein von dem Endgerät unterstütztes Auswahlverfahren umfasst; und
wobei die Verarbeitungseinheit ferner dazu konfiguriert ist, das erste Auswahlverfahren basierend auf den Kapazitätsinformationen und der ML-Aufgabe zu bestimmen.

11. Kommunikationsvorrichtung, umfassend einen Prozessor und einen Speicher, wobei der Prozessor mit dem Speicher gekoppelt ist, der Speicher Programmanweisungen speichert und das Datenübertragungsverfahren nach einem der Ansprüche 1 bis 7 durchgeführt wird, wenn die im Speicher gespeicherten Programmanweisungen durch den Prozessor ausgeführt werden, wobei die Kommunikationsvorrichtung ein Endgerät ist, oder das Datenübertragungsverfahren nach Anspruch 8 durchgeführt wird, wobei die Kommunikationsvorrichtung ein Netzgerät ist.

12. Chip, wobei der Chip eine Logikschaltung und eine Eingabe-/Ausgabeschnittstelle umfasst, die Eingabe-/Ausgabeschnittstelle dazu konfiguriert ist, mit einem anderen Modul als dem Chip zu kommunizieren, und die Logikschaltung dazu konfiguriert ist, ein Computerprogramm oder Anweisungen auszuführen, um ein Endgerät dazu zu steuern, das Datenübertragungsverfahren nach einem der Ansprüche 1 bis 7 durchzuführen, oder ein Netzgerät dazu zu steuern, das Datenübertragungsverfahren nach Anspruch 8 durchzuführen.

13. Computerlesbares Speichermedium, wobei das computerlesbare Speichermedium ein Programm speichert und, wenn das Programm von einem Prozessor eines Endgeräts aufgerufen wird, das Datenübertragungsverfahren nach einem der Ansprüche 1 bis 7 durchgeführt wird, oder, wenn das Programm von einem Prozessor eines Netzgeräts aufgerufen wird, das Datenübertragungsverfahren nach Anspruch 8 durchgeführt wird.

## Revendications

1. Procédé de transmission de données, comprenant :
l'envoi, par un dispositif terminal, d'informations de capacité à un dispositif de réseau, dans lequel les informations de capacité comprennent un second procédé de sélection, dans lequel le second procédé de sélection comprend un procédé de sélection pris en charge par le dispositif terminal, et les informations de capacité sont utilisables, au niveau du dispositif de réseau, pour déterminer un premier procédé de sélection ;
la réception, par le dispositif terminal, d'informations sur le premier procédé de sélection provenant du dispositif de réseau, dans lequel les informations concernant le premier procédé de sélection indiquent un procédé de sélection de premières données pertinentes pour une tâche d'apprentissage automatique, ML, dans lequel les premières données sont utilisables, au niveau du dispositif de réseau, pour entraîner un modèle de la tâche ML ;
la réalisation, par le dispositif terminal, de la sélection de données à l'aide du premier procédé de sélection, afin d'obtenir les premières données ; et
l'envoi, par le dispositif terminal, des premières données au dispositif de réseau.

2. Procédé selon la revendication 1, dans lequel les informations de capacité comprennent en outre au moins un des éléments suivants : une capacité de calcul et une capacité de données, dans lequel
la capacité de calcul comprend une capacité de traitement de données du dispositif terminal ; et
la capacité de données comprend une quantité de données stockées par le dispositif terminal et utilisées pour l'apprentissage automatique.

3. Procédé selon l'une quelconque des revendications 1 ou 2, dans lequel le procédé comprend en outre :
la réception, par le dispositif terminal, d'un indice de mesure de performance provenant du dispositif de réseau ; et
l'envoi, par le dispositif terminal, d'une valeur de l'indice de mesure de performance au dispositif de réseau.

4. Procédé selon la revendication 3, dans lequel l'indice de mesure de performance comprend au moins l'un des éléments suivants : un coefficient de Jaccard JC, un indice de Rand RI, un taux de précision ou un taux d'erreur.

5. Procédé selon l'une quelconque des revendications 1 à 4, dans lequel le procédé comprend en outre :
la réception, par le dispositif terminal, d'un critère d'arrêt provenant du dispositif de réseau, dans lequel le critère d'arrêt indique une condition qui doit être satisfaite lorsque le dispositif terminal arrête la sélection de données ; et
la réalisation, par le dispositif terminal, de la sélection de données à l'aide du premier procédé de sélection, afin d'obtenir des premières données :
la réalisation, par le dispositif terminal sur la base du critère d'arrêt, de la sélection de données à l'aide du premier procédé de sélection, afin d'obtenir les premières données.

6. Procédé selon la revendication 5, dans lequel le critère d'arrêt comprend au moins l'un des éléments suivants : une quantité de caractéristiques, une quantité d'itérations ou une condition de performance d'itération, dans lequel
la quantité de caractéristiques comprend une quantité de caractéristiques des premières données ;
la quantité d'itérations comprend la quantité d'itérations réalisées par le dispositif terminal à l'aide du premier procédé de sélection lors de la sélection de données ; et
la condition de performance d'itération comprend une valeur d'un indice de mesure de performance qui doit être satisfaite lorsque le dispositif terminal arrête la sélection de données à l'aide du premier procédé de sélection.

7. Procédé selon l'une quelconque des revendications 1 à 6, dans lequel le premier procédé de sélection comprend l'un des éléments suivants : un procédé de caractéristiques pertinentes, un procédé de gain d'informations, un procédé de sélection de caractéristiques multi-clusters, un procédé d'encapsulation de Las Vegas, un procédé de régression d'arête ou un procédé d'opérateur de rétrécissement absolu minimal.

8. Procédé de transmission de données, comprenant :
la réception, par un dispositif de réseau, d'informations de capacité provenant d'un dispositif terminal, dans lequel les informations de capacité indiquent une capacité de dispositif du dispositif terminal à réaliser une sélection de données et les informations de capacité comprennent un second procédé de sélection, dans lequel le second procédé de sélection est pris en charge par le dispositif terminal ;
la détermination, par le dispositif de réseau, d'un premier procédé de sélection sur la base des informations de capacité et d'une tâche d'apprentissage automatique, ML ;
l'envoi, par le dispositif de réseau, d'informations concernant le premier procédé de sélection au dispositif terminal, les informations concernant le premier procédé de sélection indiquent un procédé de sélection des premières données pertinentes pour la tâche ML ; et
la réception, par le dispositif de réseau, des premières données provenant du dispositif terminal, dans lequel les premières données sont utilisées pour entraîner un modèle de la tâche ML.

9. Appareil de communication, dans lequel l'appareil de communication est un dispositif terminal, comprenant :
une unité de réception, configurée pour recevoir des informations concernant un premier procédé de sélection provenant d'un dispositif de réseau, dans lequel les informations concernant le premier procédé de sélection indiquent un procédé de sélection de premières données pertinentes pour une tâche d'apprentissage automatique ML, dans lequel les premières données sont utilisables, au niveau du dispositif de réseau, pour entraîner un modèle de la tâche ML ;
une unité de traitement, configurée pour réaliser la sélection de données à l'aide du premier procédé de sélection, afin d'obtenir les premières données ; et
une unité d'envoi, configurée pour envoyer les premières données au dispositif de réseau, dans lequel l'unité d'envoi est en outre configurée pour envoyer des informations de capacité au dispositif de réseau, dans lequel les informations de capacité comprennent un second procédé de sélection, dans lequel le second procédé de sélection comprend un procédé de sélection pris en charge par le dispositif terminal et les informations de capacité sont utilisables, au niveau du dispositif de réseau, pour déterminer le premier procédé de sélection.

10. Appareil de communication, dans lequel l'appareil de communication est un dispositif de réseau, comprenant :
une unité d'envoi, configurée pour envoyer des informations concernant un premier procédé de sélection à un dispositif terminal, dans lequel les informations concernant le premier procédé de sélection indiquent un procédé de sélection de premières données pertinentes pour une tâche d'apprentissage automatique ML ;
une unité de réception, configurée pour recevoir les premières données provenant du dispositif terminal ; et
une unité de traitement, configurée pour entraîner un modèle de la tâche ML sur la base des premières données ;
dans lequel l'unité de réception est en outre configurée pour recevoir des informations de capacité provenant du dispositif terminal, dans lequel les informations de capacité indiquent une capacité de dispositif du dispositif terminal à réaliser une sélection de données et les informations de capacité comprennent un second procédé de sélection, dans lequel le second procédé de sélection comprend un procédé de sélection pris en charge par le dispositif terminal ; et
dans lequel l'unité de traitement est en outre configurée pour déterminer le premier procédé de sélection sur la base des informations de capacité et de la tâche ML.

11. Appareil de communication, comprenant un processeur et une mémoire, dans lequel le processeur est couplé à la mémoire, la mémoire stocke des instructions de programme, et lorsque les instructions de programme stockées dans la mémoire sont exécutées par le processeur, le procédé de transmission de données selon l'une quelconque des revendications 1 à 7 est réalisé, dans lequel l'appareil de communication est un dispositif terminal, ou le procédé de transmission de données selon la revendication 8 est réalisé, dans lequel l'appareil de communication est un dispositif de réseau.

12. Puce, dans laquelle la puce comprend un circuit logique et une interface d'entrée/sortie, l'interface d'entrée/sortie est configurée pour communiquer avec un module autre que la puce, et le circuit logique est configuré pour exécuter un programme informatique ou des instructions, pour contrôler un dispositif terminal afin de réaliser le procédé de transmission de données selon l'une quelconque des revendications 1 à 7 ou pour contrôler un dispositif de réseau afin de réaliser le procédé de transmission de données selon la revendication 8.

13. Support de stockage lisible par ordinateur, dans lequel le support de stockage lisible par ordinateur stocke un programme, et lorsque le programme est invoqué par un processeur d'un dispositif terminal, le procédé de transmission de données selon l'une quelconque des revendications 1 à 7 est réalisé, ou, lorsque le programme est invoqué par un processeur d'un dispositif de réseau, le procédé de transmission de données selon la revendication 8 est réalisé.
